# EUROPÄISCHE PATENTSCHRIFT

(11) **EP 1 695 870 B1**
(45) Veröffentlichungstag und Bekanntmachung des Hinweises auf die Patenterteilung: **09.07.2008**
(21) Anmeldenummer: 06003008.7
(22) Anmeldetag: 15.02.2006
(51) Int. Cl.: B60R 1/074, B60R 1/07

(54) **Verfahren zum Anklappen eines Aussenspiegels eines Kraftfahrzeugs**
Method for folding a vehicle rearview mirror
Méthode d'escamotage d'un rétroviseur extérieur de véhicule

(30) Priorität: 26.02.2005 DE 102005008948
(43) Veröffentlichungstag der Anmeldung: 30.08.2006
(73) Patentinhaber: GM Global Technology Operations, Inc., Detroit, MI 48265-3000 (US)
(72) Erfinder: Bald, Heiko, 64397 Modautal (DE)
(74) Vertreter: Daniel, Ulrich W.P.

(56) Entgegenhaltungen:
- EP-A- 0 433 531
- PATENT ABSTRACTS OF JAPAN Bd. 013, Nr. 335 (M-856), 27. Juli 1989 (1989-07-27) & JP 01 114552 A (AISIN SEIKI CO LTD), 8. Mai 1989 (1989-05-08)
- PATENT ABSTRACTS OF JAPAN Bd. 014, Nr. 157 (M-0955), 27. März 1990 (1990-03-27) & JP 02 018131 A (FUJITSU TEN LTD), 22. Januar 1990 (1990-01-22)
- PATENT ABSTRACTS OF JAPAN Bd. 011, Nr. 057 (M-564), 21. Februar 1987 (1987-02-21) & JP 61 218452 A (MURAKAMI KAIMEIDOU:KK), 27. September 1986 (1986-09-27)
- PATENT ABSTRACTS OF JAPAN Bd. 012, Nr. 274 (M-725), 29. Juli 1988 (1988-07-29) & JP 63 057354 A (FUJI HEAVY IND LTD), 12. März 1988 (1988-03-12)

## Beschreibung

Die Erfindung bezieht sich auf ein Verfahren zum Anklappen eines Außenspiegels an eine Außenseite einer Karosserie eines Kraftfahrzeugs, wobei das Anklappen von einem Nutzer des Kraftfahrzeugs ausgelöst wird.

Aus der Praxis der Kraftfahrzeugtechnik ist es bekannt, auf der, in Fahrtrichtung gesehen, linken und/oder rechten Seite einer Karosserie des Kraftfahrzeugs jeweils einen Außenspiegel anzuordnen. Mit einem Blick in den linken oder rechten Außenspiegel kann der Fahrer des Kraftfahrzeugs jeweils das Verkehrsgeschehen in den seitlich hinter dem Kraftfahrzeug liegenden Bereichen überwachen und beispielsweise vor einem Überholvorgang überprüfen, ob sich hinter ihm nicht ein schneller fahrender Verkehrsteilnehmer befindet.

Ein Außenspiegel besteht im Wesentlichen aus einem schalenartigen Gehäuse, in dem das eigentliche Spiegelglas angeordnet ist. Dieses Spiegelglas kann entweder manuell oder mit Hilfe vom Fahrer anzusteuernder Stellmotoren derart um zwei zueinander senkrecht stehende Achsen verschwenkt werden, dass in Abhängigkeit von der Sitzposition des Fahrers ein maximales Sichtfeld zur Verfügung steht. Das Spiegelglas kann auch beheizbar ausgeführt sein und ist entweder plan oder zumindest teilweise sphärisch ausgeformt, um das Sichtfeld vor allem im "toten Winkel" zu vergrößern. Des Weiteren kann in das Gehäuse des Außenspiegels eine Blinkerleuchte integriert sein.

Die Außenspiegel sind üblicherweise derart ausgelegt, dass ihr Gehäuse manuell um eine im Wesentlichen senkrecht stehende Achse an die Außenseite der Karosserie des Kraftfahrzeugs anklappbar ist, um eine Beschädigung des über die Karosserie vorstehenden Gehäuses, beispielsweise bei einem geparkten Kraftfahrzeug, zu vermeiden. Hierzu muss jedoch das besonders in den Wintermonaten häufig verdreckte Spiegelgehäuse vom Fahrer manuell betätigt werden, so dass das Anklappen oftmals unterbleibt, um sich nicht schmutzig zu machen.

Die DE 43 40 850 A1 beschreibt eine Steuerungseinrichtung für einen elektrisch beheizbaren und elektromotorisch verstellbaren Kraftfahrzeug-Außenspiegel, die eine spezielle Schaltung aufweist, mit der die Zahl der in das Gehäuse des Außenspiegels zu verlegenden elektrischen Leitungen reduziert werden kann. Hierbei ist lediglich das eigentliche Spiegelglas z. B. mit Hilfe von Elektromotoren verstellbar. Ein Anklappen des Gehäuses des Außenspiegels ist nicht offenbart.

Weiterhin ist es bekannt, zum Anklappen des Außenspiegels bzw. seines Gehäuses den Klappmechanismus mit einem elektrischen Antrieb zu betätigen. Somit kann der Fahrer oder ein Beifahrer des Kraftfahrzeugs, wenn er es wünscht, beispielsweise durch Betätigen eines Betätigungselements im Armaturenbrett, das Anklappen und das Zurückklappen in die abstehende Position des Außenspiegels auslösen. Hierbei ist es möglich, das Anklappen selbsttätig von einem Steuergerät im Kraftfahrzeug, das mit allen Komponenten und Sensoren des Kraftfahrzeugs über dem Fachmann bekannte Datenbus-Architekturen in Verbindung steht, bei einem Ansteuern der Zentralverriegelung vorzunehmen. Das bedeutet, dass beim Verriegeln der Zentralverriegelung automatisch auch der oder die Außenspiegel angeklappt werden. Wird die Zentralverriegelung entriegelt, werden die Außenspiegel wieder zurückgeklappt.

Die DE 198 20 786 A1 offenbart einen Außenspiegel für Fahrzeuge, bei dem das Anklappen und Zurückklappen des Außenspiegels an das Betätigen einer Zündung des Motors des Kraftfahrzeugs gekoppelt ist. Wird die Zündung eingeschaltet, werden die Außenspiegel in die abstehende Position geklappt und beim Ausschalten der Zündung werden sie wiederum an die Außenseite der Karosserie des Kraftfahrzeugs angeklappt.

Darüber hinaus offenbart die JP 01 114 552 A ein Verfahren zum Anklappen eines Außenspiegels eines Kraftfahrzeuges, wobei das Anklappen von einem Nutzer durch die Beaufschlagung eines Spiegelanklappschalters ausgelöst wird. Zum Anklappen des Spiegels ist es weiterhin erforderlich, dass ein Zündschlüssel abgezogen, der Fahrer von seinem Sitz aufgestanden und die Fahrzeugtür zum Abschließen geschlossen ist.

Ferner beschreibt die JP 63 057 354 A eine Anklappvorrichtung eines Kraftfahrzeuges für einen Außenspiegel eines Kraftfahrzeuges, die bei einer verriegelten Fahrertür den Außenspiegel anklappt.

Im Weiteren zeigt die JP 02 018 131 A eine Türspiegelsteuerung mit einer Steuervorrichtung, einer Verriegelungsvorrichtung und einem Türspiegel auf der rechten und der linken Seite des Kraftfahrzeuges, die auf einem Betriebssignal einer Fernbedienung basiert. Bei Beaufschlagung eines Drucktastenschalters der Fernbedienung wird ein spezifi-ziertes Betriebssignal von einem Oszillatorkreis über eine Übermittlungsantenne und eine Empfangsantenne sowie eine Empfängerschaltung zu einem Verarbeitungskreis gesendet, der einen Auslöser und den Antriebsmechanismus für jeden Türspiegel steuert, um die Türspiegel beim Verriegeln der Tür anzuklappen.

Schließlich beschreibt die JP 61 218 452 A einen durch einen Motor verstellbaren Spiegel eines Kraftfahrzeuges, wobei ein An- bzw. Abklappen eines rechts- oder linksseitigen Spiegels mittels eines in einer Fernbedienung aufgenommenen Auswahlschalters vorgenommen wird.

Die bekannten Verfahren sind insofern nachteilig, als beim Anklappen des Außenspiegels vor dem Verlassen des Kraftfahrzeugs eine bequeme Überwachung des rückwärtigen Verkehrsgeschehens nicht mehr möglich ist, da der Außenspiegel bzw. das Spiegelglas bereits an die Au-ßenseite der Karosserie des Kraftfahrzeugs angeklappt ist. Demzufolge ist es nicht auszuschließen, dass eine Fahrzeugtür ohne vorherige Kontrolle geöffnet und beispielsweise ein Unfall mit einem gerade vorbeifahrenden Radfahrer verursacht wird.

Es ist Aufgabe der Erfindung, ein Verfahren zum Anklappen eines Außenspiegels eines Kraftfahrzeugs der eingangs genannten Art anzugeben, mit dem die Verkehrssicherheit, insbesondere beim Aussteigen, erhöht und ein verbesserter Nutzungskomfort für den Fahrer des Kraftfahrzeugs gegeben ist.

Erfindungsgemäß wird die Aufgabe dadurch gelöst, dass der Außenspiegel erst dann angeklappt wird, wenn eine Tür des Kraftfahrzeugs geöffnet und wieder geschlossen wurde.

Der Kerngedanke der Erfindung besteht darin, dass selbst dann wenn das Anklappen des Außenspiegels von einem Fahrer oder Beifahrer des Kraftfahrzeugs ausgelöst wurde, z. B. durch Drücken eines Betätigungselements, der Anklappvorgang dennoch erst erfolgt, wenn eine Fahrzeugtür des Kraftfahrzeugs geöffnet und nachfolgend wiederum geschlossen wurde. Dieses Öffnen und Schließen der Fahrzeugtür wird z. B. mit Hilfe bereits im Kraftfahrzeug bzw. in der Fahrzeugtür vorhandener Sensoren überwacht und entsprechende Signale an ein zentrales Steuergerät weitergeleitet. Das Steuergerät löst das Anklappen in an sich bekannter Weise erst dann aus, wenn von dem Sensor nach dem Öffnen der Fahrzeugtür wiederum das entsprechende Signal für den Zustand "Fahrzeugtür geschlossen" übermittelt wird.

Der Vorteil der Erfindung liegt darin, dass beispielsweise der Fahrer zwar das Anklappen der Außenspiegel auslöst, er dann aber zum Aussteigen immer noch die ausgeklappten Außenspiegel, insbesondere den auf seiner Fahrerseite, einsehen kann, um das rückwärtige Verkehrsgeschehen zu überwachen. Nachfolgend kann er ohne Gefährdung von sich oder anderen die Tür öffnen, aussteigen und nachfolgend die Tür wiederum schließen. Erst dann werden die Außenspiegel angeklappt, um eine Beschädigung während des Parkens, z. B. durch vorbeifahrende andere Kraftfahrzeuge, zu vermeiden.

Selbstverständlich können hierbei sowohl der linke Außenspiegel auf der Fahrerseite als auch der rechte Außenspiegel auf der Beifahrerseite, soweit vorhanden, gemeinsam oder unabhängig voneinander angeklappt werden. Unter dem Begriff Außenspiegel sind sowohl die vorstehend beschriebenen Außenspiegel zu verstehen, die in einem Gehäuse angeordnet sind, als auch die besonders bei Lastkraftwagen oder Omnibussen vorhandenen Außenspiegel, die im Wesentlichen lediglich aus einer Spiegelfläche, die an einer Halterung befestigt ist, bestehen. In diesem Fall ist die Halterung anklappbar ausgelegt.

Vorteilhafterweise wird lediglich derjenige Außenspiegel angeklappt, an dessen Fahrzeugseite auch eine Tür geöffnet und geschlossen wurde. Sonach kann ein Fahrer zwar das Anklappen von zwei Außenspiegeln auslösen und selbst aber im Kraftfahrzeug sitzen bleiben und somit verbleibt der Außenspiegel auf der Fahrerseite auch im ausgeklappten Zustand. Ein Beifahrer hingegen kann aussteigen und die Türe schließen. Nachfolgend wird der Außenspiegel auf der Beifahrerseite selbsttätig angeklappt. Im Prinzip ist es auch möglich, das Anklappen der beiden Außenspiegel unabhängig voneinander auszulösen, z. B. mit zwei verschiedenen Betätigungselementen.

Nach einer vorteilhaften Ausgestaltung kann der Fahrer des Kraftfahrzeugs das Anklappen der Spiegel dennoch vornehmen, auch wenn er hierzu nicht eine Tür öffnet und wiederum schließt. Dies kann bei einer Durchfahrt durch eine enge Passage mit dem Kraftfahrzeug notwendig sein, bei der die abstehenden Außenspiegel z. B. an einer Mauer beschädigt werden.

Hierzu kann der Fahrer u. a. ein Betätigungselement im Armaturenbrett des Kraftfahrzeugs nutzen. Wird dieses Betätigungselement nur einmal kurz betätigt, z. B. gedrückt, dann wird von dem zentralen Steuergerät erkannt, dass nach einem nachfolgenden Öffnen und Schließen einer Tür des Kraftfahrzeugs die Außenspiegel angeklappt werden sollen. Bis dahin bleiben die Spiegel in der ausgeklappten Position. Wird das Betätigungselement jedoch für einen längeren Zeitraum, z. B. länger als zwei Sekunden, gedrückt gehalten, so wird vom zentralen Steuergerät erkannt, dass ein sofortiges Anklappen der Außenspiegel vom Fahrer oder Beifahrer gewünscht ist. Dementsprechend werden die Stellmotoren für den Klappmechanismus der Außenspiegel sofort angesteuert. Nachfolgend können durch kurzes erneutes Antippen des Betätigungselements, nachdem die enge Durchfahrt passiert worden ist, die Außenspiegel wieder zurückgeklappt werden.

In gleicher Weise kann das Anklappen der Außenspiegel vom Fahrer auch nachgeholt werden, wenn er vor dem Verlassen des Kraftfahrzeugs das Auslösen des Anklappvorgangs vergessen haben sollte. Hierzu kann er mit einer Fernbedienung, die mit Infrarot-, Ultraschall- oder elektromagnetischen Signalen arbeitet, eine Zentralverriegelung des Kraftfahrzeugs ansteuern. Beim ersten Verschlussvorgang wird die Zentralverriegelung in an sich bekannter Weise verriegelt. Wird die Verriegelungstaste an der Fernbedienung erneut betätigt oder eine separate Taste, wird vom zentralen Steuergerät erkannt, dass nunmehr auch das Anklappen der Außenspiegel von einem Nutzer des Kraftfahrzeugs gewünscht ist. Nähert sich der Nutzer wiederum seinem Kraftfahrzeug und entriegelt er die Zentralverriegelung mit seiner Fernbedienung, so werden gleichzeitig auch die Außenspiegel wieder in ihre abstehenden Positionen zurückgeklappt.

Weiterhin ist es möglich, in dem zentralen Steuergerät für einen oder mehrere Nutzer des Kraftfahrzeugs jeweils unterschiedliche Nutzungsprofile einzuspeichern. Diese können u. a. eine bevorzugte Klimatisierung des Innenraums oder eine bestimmte Sitzposition enthalten. Ebenso kann das Anklappen der Außenspiegel bei jedem Parkvorgang, d. h. dem Öffnen und Schließen der Fahrertür sowie dem Verriegeln der Zentralverriegelung, in dem Nutzungsprofil hinterlegt sein.

In gleicher Weise kann das selbsttätige An- und Abklappen der Außenspiegel an das Ab- und Anschalten der Zündung und/oder an einen Verriegelungs- und Entriegelungsvorgang an der Zentralverriegelung gekoppelt sein.

Es versteht sich, dass die vorstehend genannten Merkmale nicht nur in der jeweils angegebenen Kombination sondern auch in anderen Kombinationen verwendbar sind. Der Rahmen der Erfindung ist nur durch die Ansprüche definiert.

## Patentansprüche

1. Verfahren zum Anklappen eines Außenspiegels an eine Außenseite einer Karosserie eines Kraftfahrzeugs, wobei das Anklappen von einem Nutzer des Kraftfahrzeugs ausgelöst wird, **dadurch gekennzeichnet, dass** der Außenspiegel erst dann angeklappt wird, wenn eine Tür des Kraftfahrzeugs geöffnet und wieder geschlossen wurde.

2. Verfahren nach Anspruch 1, **dadurch gekennzeichnet, dass** nur derjenige Außenspiegel angeklappt wird, auf dessen Fahrzeugseite eine Tür geöffnet und wiederum geschlossen wurde.

3. Verfahren nach Anspruch 1 oder 2, **dadurch gekennzeichnet, dass** das Anklappen vom Nutzer unabhängig vom Öffnen und Schließen der Türen ausgelöst wird.

4. Verfahren nach Anspruch 3, **dadurch gekennzeichnet, dass** das Anklappen durch das Betätigen eines Betätigungselements im Armaturenbrett ausgelöst wird.

5. Verfahren nach Anspruch 3, **dadurch gekennzeichnet, dass** das Anklappen der Außenspiegel durch das Betätigen einer Fernbedienung ausgelöst wird.

6. Verfahren nach einem der Ansprüche 1 bis 5, **dadurch gekennzeichnet, dass** ein Außenspiegel selbsttätig angeklappt wird, ohne vorherige Auslösung durch den Fahrer des Kraftfahrzeugs, insbesondere entsprechend eines in einem Steuergerät hinterlegten Nutzerprofils.

7. Verfahren nach Anspruch 6, **dadurch gekennzeichnet, dass** das Anklappen nach Abschalten einer Zündung des Kraftfahrzeugs erfolgt.

8. Verfahren nach Anspruch 6, **dadurch gekennzeichnet, dass** das Anklappen nach dem Verriegeln einer Zentralverriegelung des Kraftfahrzeugs erfolgt.

## Claims

1. Method for folding an external mirror onto an outside of a body of a motor vehicle, wherein the folding is actuated by a user of the motor vehicle, **characterised in that** the external mirror is only folded when a door of the motor vehicle has been opened and closed again.

2. Method according to claim 1, **characterised in that** only the external mirror on the vehicle side, on which a door has been opened and closed again, is folded.

3. Method according to claim 1 or 2, **characterised in that** the folding is actuated by the user irrespective of the opening and closing of the doors.

4. Method according to claim 3, **characterised in that** the folding is actuated by the operation of an operating element in the instrument panel.

5. Method according to claim 3, **characterised in that** the folding of the external mirror is actuated by the operation of a remote control.

6. Method according to one of claims 1 to 5, **characterised in that** an external mirror is automatically folded without previous actuation by the driver of the motor vehicle, in particular in accordance with a user profile stored in a control device.

7. Method according to claim 6, **characterised in that** folding occurs after an ignition means of the motor vehicle is switched off.

8. Method according to claim 6, **characterised in that** folding occurs after a central locking system of the motor vehicle is locked.

## Revendications

1. Procédé d'escamotage d'un rétroviseur extérieur sur un côté extérieur d'une carrosserie d'un véhicule automobile, l'escamotage étant déclenché par un utilisateur du véhicule automobile, **caractérisé en ce que** le rétroviseur extérieur n'est escamoté que si une porte du véhicule automobile a été ouverte puis refermée.

2. Procédé selon la revendication 1, **caractérisé en ce que** seul le rétroviseur extérieur est escamoté, sur le côté du véhicule duquel une porte a été ouverte puis refermée.

3. Procédé selon la revendication 1 ou 2, **caractérisé en ce que** l'escamotage est déclenché par l'utilisateur indépendamment de l'ouverture et de la fermeture des portes.

4. Procédé selon la revendication 3, **caractérisé en ce que** l'escamotage est déclenché en actionnant un élément d'actionnement dans le tableau de bord.

5. Procédé selon la revendication 3, **caractérisé en ce que** l'escamotage du rétroviseur extérieur est déclenché en actionnant une télécommande.

6. Procédé selon l'une quelconque des revendications 1 à 5, **caractérisé en ce qu'**un rétroviseur extérieur est automatiquement escamoté sans déclenchement préalable par le conducteur du véhicule automobile, en particulier selon un profil d'utilisateur enregistré dans un appareil de commande.

7. Procédé selon la revendication 6, **caractérisé en ce que** l'escamotage est réalisé après l'arrêt d'un allumage du véhicule automobile.

8. Procédé selon la revendication 6, **caractérisé en ce que** l'escamotage est réalisé après le verrouillage d'un dispositif de verrouillage centralisé du véhicule automobile.
